**Europäisches Patentamt**

**European Patent Office**

**Office européen des brevets**

(19)

(11) Publication number: **0 037 059**
**A2**

(12)

# EUROPEAN PATENT APPLICATION

(21) Application number: **81102219.3**

(22) Date of filing: **25.03.81**

(51) Int. Cl.³: **F 16 H 47/08**

(30) Priority: **27.03.80 US 134598**

(43) Date of publication of application:
**07.10.81 Bulletin 81/40**

(84) Designated Contracting States:
**DE FR GB**

(71) Applicant: **FORD-WERKE AKTIENGESELLSCHAFT**
**Ottoplatz 2 Postfach 210369**
**D-5000 Köln 21(DE)**

(84) Designated Contracting States:
**DE**

(71) Applicant: **FORD MOTOR COMPANY LIMITED**
**Eagle Way**
**Brentwood Essex CM13 3BW(GB)**

(84) Designated Contracting States:
**GB**

(71) Applicant: **FORD FRANCE SOCIETE ANONYME**
**344 Avenue Napoleon Bonaparte B.P. 307**
**F-92506 Rueil Malmaison Cedex(FR)**

(84) Designated Contracting States:
**FR**

(72) Inventor: **Smalinskas, Stepas**
**14451 Melrose**
**Livonia Michigan 48154(US)**

(74) Representative: **Ritzkowsky, Harald, Dipl.-Ing. et al,**
**Ford-Werke Aktiengesellschaft Patentabteilung Z DRR-2**
**Ottoplatz 2**
**D-5000 Köln 21(DE)**

(54) **Three speed automatic transmission with split torque delivery paths in the two high speed ratios.**

(57) A hydrokinetic power transmission mechanism having a torque converter (18) and two simple planetary gear units (20 and 22) in combination with the torque splitter gear unit (52) wherein the elements of the gearing are arranged with respect to friction torque establishing devices in a compact fashion to provide minimum overall dimensions so that it is adaptable for an automotive vehicle driveline with a fully hydrokinetic low speed accelerating speed ratio and a split torque delivery path during operation in the two higher speed ratios to effect an increased engine fuel economy as a portion of the engine torque is delivered hydrokinetically through the transmission system

./...

FIG. 2.

## Three Speed Automatic Transmission with Split Torque delivery Paths in the two High Speed Ratios

My invention constitutes an improvement in prior patents Nos. 4,014,223; 2,829,542; 3,722,323; 3,712,154; 2,874,590; 29,19,606; 3,234,820; 3,246,542 and 3,747,435. These prior art patents disclose planetary gear systems wherein multiple torque delivery paths are established between an input member and an output member, the input member being adapted to be connected to an internal combustion engine and the output member being adapted to be connected through a driveline system to vehicle traction wheels. They show also that it is old in the art to provide a torque splitter unit for establishing two ratios for every ratio that can be obtained through the main gearing system. The present invention is distinguishable from the teachings of the prior art because of the unobvious mode of cooperation of the torque converter unit with respect to the main gearing system, which consists of two simple planetary gear units, the main gear system having two input members and the torque splitter unit making it possible to deliver torque selectively from one input member to the other input member as a ratio change occurs from the lowest ratio to the intermediate ratio and again from the intermediate ratio to the direct drive ratio, both input members being employed during the second or intermediate ratio and during the direct drive ratio and only a single input member being provided during operation in the lowest speed ratio.

The present invention makes use of friction clutches and brakes that are strategically located with respect to the main gear system to provide a minimum overall axial dimension for the transmission assembly and wherein the torque splitter unit is located within the hydrokinetic unit.

## BRIEF DESCRIPTION OF THE FIGURES OF THE DRAWINGS

Figure 1 is a cross-sectional assembly view of the preferred embodiment of my invention.

Figure 2 is a schematic representation of the gear system for the transmission of Figure 1.

Figure 3 is a chart showing the clutch and brake engagement and release pattern as well as a torque ratio for each operating mode for the transmission of Figure 1.


## PARTICULAR DESCRIPTION OF THE INVENTION

Reference numeral 10 designates generally a transmission housing that includes a torque converter bell housing portion 12 and a main gearing housing portion 14. Housing portion 12 is welded or otherwise secured integrally to transverse housing support plate 16 located at the left end of the housing portion 14. The converter housing portion 12 includes a hydrokinetic torque converter 18 and the housing portion 14 encloses two simple planetary gear units 20 and 22. Torque converter 18 includes an impeller shell 24 which is supported by impeller sleeve shaft 26 at the hub of the converter. Sleeve shaft 26 is journalled at 28 in the support plate 16 which is bolted by bolts 29 to the housing portion 14. Sleeve shaft 26 is keyed to the torque input gear member. A positive displacement gear pump 30 which forms a pressure source for a control system for operating the clutches and brakes for the transmission systems which will be described subsequently. Plate 16 forms a ported end plate for the pump 30.

The impeller includes impeller blades 32 carried by the impeller housing portion 24. The periphery of the housing portion 24 is welded or bolted as shown at 34 to the outer periphery of housing portion 36. Hub portion 38 of the housing portion 36 is piloted in pilot opening 40 formed in the end of internal combustion engine crankshaft 42. The hub of the drive plate 44 is bolted to the crankshaft 42. The periphery of the drive plate 44 carries a starter ring gear 46 and it is bolted to the housing portion 36. The converter 18 includes also a turbine 47 that has radial inflow turbine blades 48 which cooperate with radial inflow passages defined by impeller blades 32. A bladed stator 50 is situated between the flow exit section of the turbine and the flow entrance section of the impeller.

A simple planetary torque splitter gear unit 52 is located within the housing portions 24 and 36. Gear unit 52 includes a ring gear 54, a sun gear 56 and planet pinions 58 journalled on carrier 60. Pinions 58 engage ring gear 54 and the sun gear 56, the latter being connected to or formed integrally with torque converter hub 62. Ring gear 54 is formed on a circular ring 64 which is journalled on shoulder 66 formed on carrier 60. Carrier 60 is splined at 68 to the central torque delivery shaft 70, the left hand end of the shaft 70 being piloted by pilot bushing 72 in the hub 38 of the torque converter housing portion 36.

A turbine sleeve shaft 74 is splined at 76 to the turbine hub 62 and to the sun gear 56.

A forward housing wall 78 defines in part a housing for pump 30. A stator sleeve shaft 80 is formed integrally with and extends from the housing wall 78 and surrounds turbine shaft 74. Stator sleeve shaft 80 is splined at 82 to the inner race 84 of an overrunning coupling 82. The outer race of the coupling, 82 which is shown at 84, is splined to the hub 86 of the bladed stator 50. Coupling rollers 88 engage cam surfaces in the outer race 84 whereby the clutch 82 permits freewheeling motion of the stator 50 in the direction of rotation of the impeller but prevents rotation in the opposite direction.

Thrust washers 90 and 92 are situated on either side of the overrunning coupling. Turbine shaft 92 transmits thrust forces to thrust washer 94 located on the outboard side of sun gear 56. Those thrust forces are delivered through the carrier and thrust washer 96 to the ring 64 and hence to the housing portion 36.

Ring gear 54 is splined at 98 to a damper drive plate 100 for a spring damper assembly 102. This assembly functions in a manner similar to the torque converter spring damper assembly shown, for example, in U.S. patent No. 2,901,923. It includes also a pair of driving discs 104 and 106 which are joined together by bolts 108. A welded connection at 110 provides for a solid drive between the discs 104 and 106 and the housing portion 36. Friction discs 110 and 112 are carried by or connected to plates 106 and 100. Friction material is located on either side of disc 112 and a Belleville washer spring 114 located on the left side of disc 106 exerts a friction damping force on the assembly 102. This friction damping force is supplemented by spring forces established by tangential springs 116 located in spring recessess formed in the plates 106 and 104. The springs 116 transfer driving torque from the impeller housing to the ring gear 54 as they resist relative tangential displacement of the plates 104 and 114 with respect to the member 100.

Planetary gear unit 20 comprises ring gear 118, sun gear 120 and a set of planet pinions 122 which are journalled by needle bearings on pinion shafts 124 which form a part of carrier 126. Gear unit 22 includes ring gear 128, sun gear 130, planet pinions 132 and carrier 134. Pinion shafts 136 on which pinions 132 are journalled form a part of the carrier 134. Carrier 134 also is splined drivably to ring gear 118 as shown at 138. Carrier 126 is connected at 140 to drive shell 142 which is welded or otherwise secured to ring gear 128. Brake ring 144 also forms a part of the carrier 126 and it carries brake discs 146 which are adapted to register with brake discs 148 keyed or splined to the housing as shown at 150.

An annular brake cylinder 152 is formed in housing wall 78. An annular piston 154 is located in the cylinder 152 and cooperates with the cylinder to define a pressure chamber which when pressurized exerts a force on the brake discs 148 and 146. A brake piston extension ring 156 is connected to the piston. Brake piston return spring 153 normally urges the piston 154 in a left hand direction. A low-and-reverse clutch assembly 160 establishes a driving connection between sleeve shaft 74 and sun gear 120. An intermediate and direct clutch assembly 162 establishes a driving connection between shaft 70 and carrier 126.

Clutch assembly 160 includes clutch drum 164 which is journalled on stationary support sleeve shaft 166 by bushing 168, the sleeve shaft 166 extending from the housing wall 78. A clutch torque input element 170 is splined to the sleeve shaft 74. Alternate clutch discs of the assembly 160 are splined to and carried by the element 170. Companion clutch discs are splined to an internally splined portion of the clutch drum 164. A clutch assembly reaction ring 172 splined to the clutch drum 164 forms an outer race for an overrunning coupling 174. The element 170 forms an inner race for the overrunning coupling 174.

An annular piston 176 is situated in the drum 164 and cooperates with the drum to define a clutch pressure chamber 178 which when pressurized causes the piston 176 to frictionally engage the discs of the assembly 160. Clutch piston return spring 180 acts on the annular piston to disengage the clutch assembly 160.

Clutch drum 164 is keyed drivably at 176 to clutch ring 182 which is connected to the sun gear 120.

Carrier 126 is splined at 184 to clutch drum 186 for the intermediate and direct clutch 162. Clutch drum 186 is journalled at 188 on the carrier extension sleeve 190.

Clutch input element 192 for the clutch assembly 162 carries friction clutch discs 194 for the clutch assembly 162. Companion discs 196 are externally splined to an internally splined portion of the clutch drum 186. A clutch backup ring 198 also is carried by the drum 186.

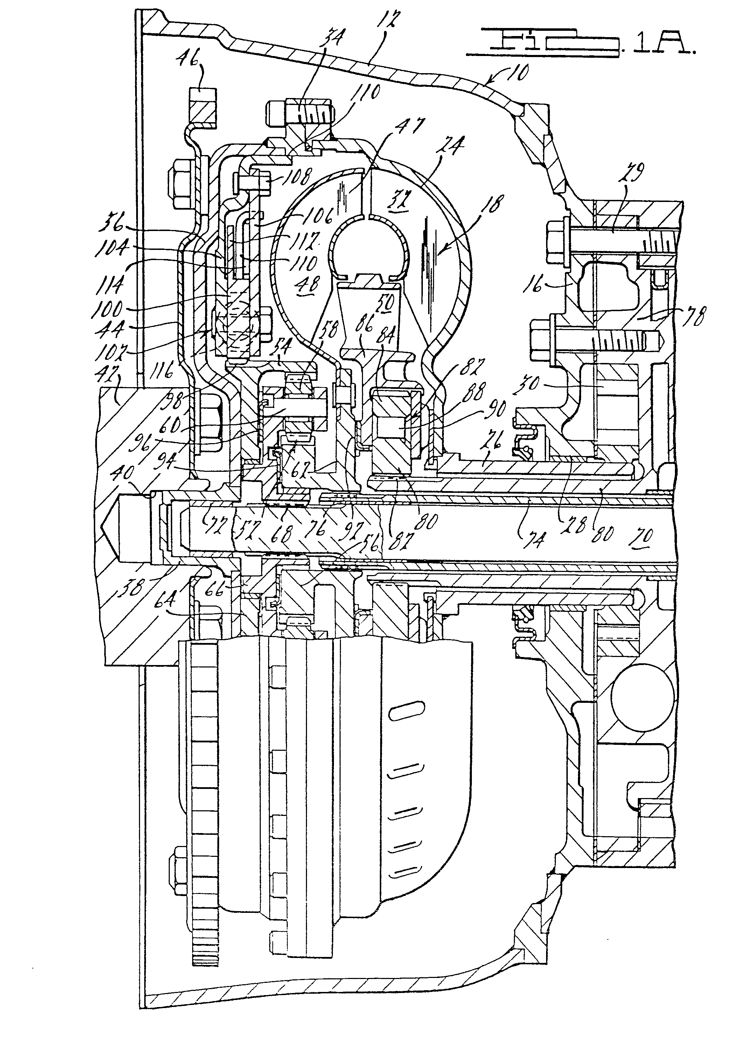

An annular piston 200 is disposed in an annular cylinder formed by the clutch drum 186. It is biased in a right hand direction, as seen in Figure 1, by clutch piston return spring 202. Pressure applied to the working chambers for the clutches 162 and 160 cause the multiple clutch discs assemblies to be applied selectively.

A low-and-intermediate brake drum 204 is connected to and rotates with sun gear 130. It is rotatably supported by bushing 206 on support ring 208 which forms a part of the transmission housing. Torque output shaft 210 is journalled on the support ring 208 by bushing 212 which is drivably connected to the carrier 134 for the gear unit 22. Shaft 210 and sleeve 190 are provided with central lubrication oil passages, as shown at 214, which communicate with an external lub oil supply passage 216 formed in the housing. Shaft 70 is provided with a central clutch pressure keyed passage 218.

Shaft 210 carries a locking gear and a governor housing 220 which rotates with the shaft 210. It includes an extension 222 which is received in central opening 224 formed in the end wall of the housing portion 14.

The parking gear and governor are enclosed by an output shaft extension housing 226 which surrounds the shaft 210 and which is bolted to the end of the housing portion 214.

An oil reservoir for the control system is formed by the oil pan generally indicated at 228 at the lower end of the housing portion 14. A control valve body 230 is located in the oil pan. It functions to control the application and release of the clutches and brakes during the various ratio changes.

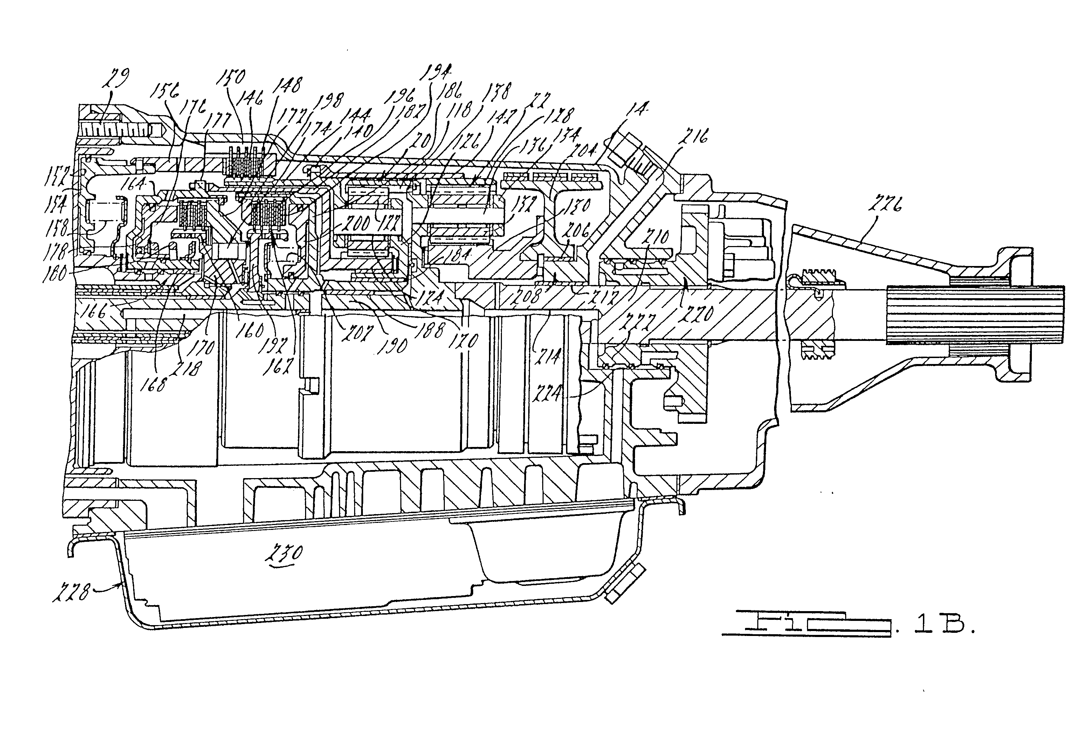

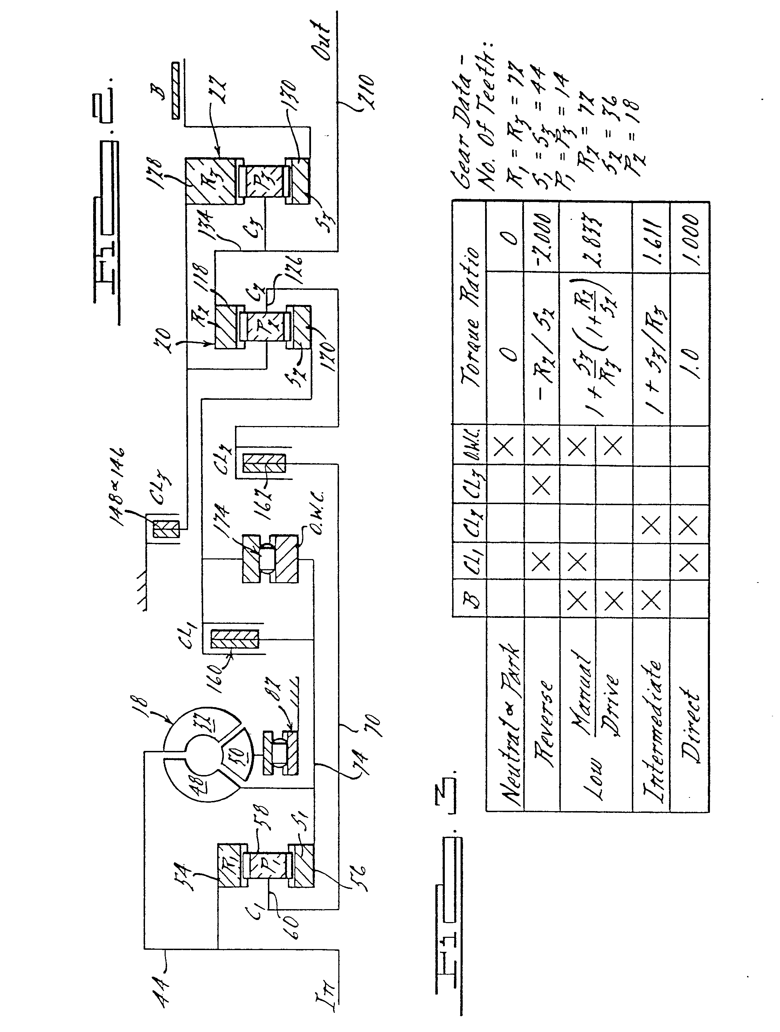

The mode of operation of the clutches and brakes can best be understood by referring to Figures 2 and 3. In Figure 3 a simple $R_1$ designates the ring gear 54 of the torque splitter unit, symbol $S_1$ designates the sun gear 56 of the torque splitter unit, reference character $C_1$ designates the carrier 60 of the torque splitter unit, reference character $P_1$ designates pinions 58.

The clutch assembly 160 is designated by reference character $CL_1$ in Figure 2. Clutch assembly 162 is designated by reference character $CL_2$ in Figure 2. The overrunning coupling 174 is designated by the reference character OWC.

The elements of the gear units 20 and 22 are similarly designated by the letter designations in Figure 2. Figure 3 shows the torque ratios that can be achieved by the gearing system for reverse, low, intermediate and direct operation. The low speed ratio is obtained by applying simultaneously the brake B which anchors the sun gear 130. Clutch $CL_1$ may be applied is so-called manual-low operation is desired. Clutch $CL_1$ bypasses the clutch OWC to permit coast braking if that is desired during normal acceleration from a standing start the clutch $CL_1$ is disengaged and the torque of the sun gear 56 is delivered through the overrunning coupling in parallel relationship with respect to the clutch $CL_1$. A ratio change to the intermediate ratio is obtained by applying clutch $CL_2$ while the brake B remains applied. Thus the sun gear $S_3$ is a reaction point for both low speed ratio operation and intermediate speed ratio operation.

During operation in the low and intermediate ratios the torque splitter gear unit acts as a torque divider between the two input shafts for the gearing as shown at 70 and 74. The torque is split in this case between the fully mechanical torque delivered to the ring gear 54 and the hydrokinetic torque delivered to the sun gear 56 during operation in the low and intermediate ratios. During operation in the lowest ratio with the clutch CL1 engaged, the torque in the shaft 74 is distributed to the sun gear 120. The brake B acts as a reaction point as it anchors the sun gear 130. Upon a shift to the intermediate ratio, the shaft 70 rather than shaft 74 acts as a torque input shaft. Torque then is distributed then to the carrier $C_2$. With the brake B remaining applied, the carrier 134 and the output shaft 210 are driven at an increased speed relative to the torque input speed. A ratio change to the high ratio is achieved by engaging both clutches $CL_1$ and $CL_2$ which locks up the gearing for rotation in unison, thus establishing a direct mechanical drive between the engine and the output shaft 210. No hydrokinetic losses occur because the converter at this time is inactive. The damper assembly 102 cushions the ratio change from the partial hydrokinetic drive mode to the fully mechanical high speed ratio mode.

Reverse drive is accomplished by engaging clutch CL$_3$ which was described earlier with reference to brake discs 148 and 146. Under these conditions torque is delivered from the turbine through the overrunning coupling and to the sun gear 120 with the carrier 126 now acting as a reaction member, the ring R$_2$ and the output shaft are driven in a reverse direction.

If it is assumed that ring gear R$_1$ and ring gear R$_3$ have 72 teeth and that sun gear S$_1$ and S$_3$ have 44 teeth and that the pinions P$_1$ and P$_3$ have 14 teeth and if it is assumed further that ring gear R$_2$ has 72 teeth sun gear S$_2$ has 36 teeth and pinion P$_2$ has 8 teeth, the ratios that can be achieved with the embodiment of the transmission disclosed here are -2.020; 2.83; 1.61 and 1.00 for reverse drive, low ratio and intermediate ratio and direct drive respectively.

## CLAIMS

1. A multiple ratio power transmission mechanism for drivably connecting an input shaft to an output shaft comprising first and second simple planetary gear units, a torque splitter gear unit, said first and second planetary gear units each comprising a ring gear, a sun gear, a carrier and planet pinions journalled on said carrier, a hydrokinetic member comprising an impeller and a turbine, said impeller being connected to said driving member, characterized in that, first and second planetary gear torque input shafts (70, 74), said torque splitter unit (52) having two torque input elements (54 and 56) the latter simultaneously being an output element (48) of the torque converter (18) and one torque output element (60), said torque output element (56) being connected to said first gear unit torque input shaft (74) and the other torque output element (60) of said splitter unit (52) being connected to said second gear unit torque input shaft (70), first clutch means (160) for connecting the sun gear (120) of said first planetary gear unit (20) to the output element (48) of said torque converter (18), second clutch means (162) for connecting the carrier (126) of said first planetary gear unit (120) to the output element (60) of said torque splitter unit (52), first brake means (B) for anchoring the sun gear (130) of said second planetary gear unit (22) and second brake means (148/146) for anchoring the ring gear (128) of said second planetary gear unit (22), the carrier (134) of said second planetary gear unit (22) being connected to the ring gear (118) of said first planetary gear unit (20) and to said output shaft (210).

2. The combination as set forth in Claim 1 characterized in that, said torque splitter unit (52) comprises a simple planetary gear set having a ring gear (54), a sun gear (56), a carrier (60) and planetary pinions (58) engageable with said center sun gear and said ring gear and supported on said carrier, the carrier (60) of said torque splitter unit (52) being connected to the first torque input shaft (70) of said gear units and the ring gear (54) thereof being connected to said driving member (44).

3. The combination as set forth in Claim 1 characterized in that, said first clutch means (160) comprising an overrunning coupling (174) adapted to deliver torque from said second torque input shaft (74) of said gear units to the sun gear (120) of said first planetary gear unit (20) and a selectively engageable friction clutch means (160) for bypassing said overrunning coupling.

FIG. 1A.

0037059

FIG. 1B.

# FIG. 2.

# FIG. 3.

| | B | CL₁ | CL₂ | CL₃ | O.W.C. | Torque Ratio | |
|---|---|---|---|---|---|---|---|
| Neutral & Park | | | | | × | $0$ | $0$ |
| Reverse | | × | | × | × | $-R_2/S_2$ | $-2.000$ |
| Low   Manual | × | × | | | × | $1+\dfrac{S_3}{R_3}\left(1+\dfrac{R_2}{S_2}\right)$ | $2.833$ |
| Low   Drive | × | | | | × | | $2.833$ |
| Intermediate | × | | × | | | $1+S_3/R_3$ | $1.611$ |
| Direct | | × | × | | | $1.0$ | $1.000$ |

Gear Data –
No. Of Teeth :

$R_1 = R_3 = 72$
$S_1 = S_3 = 44$
$P_1 = P_3 = 14$
$R_2 = 72$
$S_2 = 36$
$P_2 = 18$